# EUROPEAN PATENT SPECIFICATION

(11) **EP 3 444 174 B1**
(45) Date of publication and mention of the grant of the patent: **02.06.2021**
(21) Application number: 17889015.8
(22) Date of filing: 26.12.2017
(51) Int. Cl.: B62K 19/30, B62L 3/02, B62L 3/04, B62L 3/08, B62K 19/38

(54) **SADDLE-TYPE VEHICLE**
SATTELFAHRZEUG
VÉHICULE DU TYPE À SELLE

(30) Priority: 28.12.2016 JP 2016255926
(43) Date of publication of application: 20.02.2019
(73) Proprietor: Yamaha Hatsudoki Kabushiki Kaisha, Iwata-shi, Shizuoka 438-8501 (JP)
(72) Inventor: INUKAI, Chikara, Iwata-shi Shizuoka 438-8501 (JP); SUGIYAMA, Masazumi, Iwata-shi Shizuoka 438-8501 (JP); MATSUDA, Kimio, Iwata-shi Shizuoka 438-8501 (JP)
(74) Representative: Grünecker Patent- und Rechtsanwälte PartG mbB
(86) International application number: PCT/JP2017/046717
(87) International publication number: WO 2018/124099

(56) References cited:
- EP-A1- 2 548 792
- WO-A1-2013/140891
- WO-A1-2014/147900
- WO-A1-2014/147900
- WO-A1-2017/130355
- JP-A- 2011 195 023
- JP-A- 2013 224 107
- JP-A- 2014 162 453
- JP-A- 2017 222 237

## Description

The present invention relates to a straddled vehicle according to the preamble of independent claim 1, particularly to a straddled vehicle including a combined brake device. Such a straddled vehicle can be taken from the prior art document WO 2014/147900 A1, which discloses all the features of the preamble of independent claim 1.

There is a type of straddled vehicle including a combined brake device that causes a rear brake device and a front brake device to be actuated in a linked manner. The combined brake device includes an equalizer, a rear brake transmission member and a combined brake cable. The rear brake transmission member is a brake rod, for instance, and couples the rear brake device and the equalizer. The combined brake cable couples the front brake device and the equalizer.

When a brake pedal is pressed down, the equalizer is actuated to pull the rear brake transmission member in a direction to turn the rear brake device into a braked state, and simultaneously, to pull the combined brake cable in a direction to turn the front brake device into a braked state. Accordingly, the equalizer distributes the operating force of the brake pedal to the front brake device and the rear brake device.

As described above, the combined brake cable transmits the operating force of the brake pedal to the front brake device. For example, in a combined brake device described in PTL 1, an equalizer is disposed backward of an engine, and a combined brake cable extends upward and forward from the equalizer, while passing through a position located backward of the engine and a position located above the engine. Additionally, the combined brake cable is connected to a master cylinder attached to a handle. A brake hose is connected to the master cylinder and a brake caliper of a front brake device. The brake hose transmits the fluid pressure of the master cylinder to the brake caliper.

### CITATION LIST

### PATENT LITERATURE

PTL 1: Japan Patent No. 5792135

### SUMMARY OF THE INVENTION

### Technical Problems

In PTL 1, the front brake device is a so-called disc brake. Therefore, the combined brake cable extends from a low position in which the equalizer is disposed to a high position in which the master cylinder is disposed. On the other hand, the brake hose extends from the high position in which the master cylinder is disposed to a low position in which the brake caliper is disposed. Therefore, a path of transmitting the operating force of the brake pedal from the equalizer to the front brake device is considerably long. Because of this, the layout of the transmission path is made difficult.

Moreover, the front brake device is attached to a front wheel. In the straddled vehicle, the front wheel is turned right and left together with a steering shaft, right and left suspensions, an upper bracket and a lower bracket. Additionally, the right and left suspensions are moved up and down by contraction and extension thereof. Therefore, in layout of the transmission path, it is also important to avoid interference with these movable members.

It is an object of the present invention to achieve the following in a straddled vehicle, including shortening a transmission path from a brake pedal to a front brake device and inhibiting interference between a combined brake cable and a movable member.

### Solution to Problems

A straddled vehicle according to an aspect of the present invention includes a vehicle body frame, an engine, a front wheel, a rear wheel, a left suspension, a right suspension, a steering shaft, an upper bracket, a lower bracket, a handle member, a front brake device, a rear brake device, a brake pedal and a combined brake device.

The vehicle body frame includes a head pipe, an upper frame, a lower frame. The head pipe is disposed in a middle of the straddled vehicle in a vehicle width direction, and extends forward and downward. The upper frame extends backward from the head pipe. The lower frame is disposed at least in part below the upper frame. The engine is disposed below at least part of the upper frame, and is disposed backward of at least part of the lower frame.

The front wheel is disposed forward of the engine. The rear wheel is disposed backward of the engine. The left suspension supports the front wheel so as to make the front wheel movable in an up-and-down direction, and is disposed laterally leftward of the front wheel. The right suspension supports the front wheel so as to make the front wheel movable in the up-and-down direction, and is disposed laterally rightward of the front wheel. The steering shaft is inserted into the head pipe, and extends forward and downward. The upper bracket is disposed above the head pipe, and is connected to the steering shaft. The lower bracket is disposed below the head pipe, and is connected to the steering shaft. The handle member is connected to the upper bracket, and is operable by a driver.

The front brake device brakes the front wheel. The rear brake device brakes the rear wheel. The brake pedal is a member operated with a foot of the driver. The combined brake device causes the rear brake device and the front brake device to be actuated in a linked manner.

The left suspension extends downward and forward, and is connected to the upper bracket and the lower bracket in a position located laterally leftward of the head pipe. The right suspension extends downward and forward, and is connected to the upper bracket and the lower bracket in a position located laterally rightward of the head pipe. The steering shaft, the upper bracket, the lower bracket, the left suspension, the right suspension and the front wheel are turned with respect to the head pipe in conjunction with a motion of the handle member. The front brake device is a drum brake.

The combined brake device includes a combined actuation mechanism and a combined brake cable. The combined actuation mechanism distributes an operating force of the brake pedal to the front brake device and the rear brake device, and is disposed backward of at least part of the engine. The combined brake cable connects the combined actuation mechanism and the front brake device.

A first region is defined as one of regions located on both vehicle width directional sides of a center line passing through the middle of the straddled vehicle in the vehicle width direction, while a second region is defined as the other of the regions. The combined brake cable includes a first portion, a second portion and a third portion. The first portion is disposed in the first region. The first portion extends forward and upward from the combined actuation mechanism, and passes through a lateral side of the engine so as to overlap the engine as seen in a vehicle side view. The third potion is disposed in the second region. The third portion extends downward and forward, and is connected to the front brake device.

The second portion is connected to the first portion and the third portion. The second potion extends to cross the middle of the straddled vehicle in the vehicle width direction while passing between the lower frame and the right and left suspensions in a vehicle back-and-forth direction. The second portion is attached to the vehicle body frame in a position located between a left edge of the left suspension and a right edge of the right suspension in the vehicle width direction, the vehicle body frame includes a stay for attaching the second portion, wherein the stay is directly attached to the lower frame and protrudes forward of a front edge of the lower frame, or a gusset is attached to the lower frame and the upper frame the stay is attached to the lower frame through the gusset, or the stay is directly attached to the upper frame, or the stay is directly attached to the head pipe.

The inventor of the present invention conceived of shortening the transmission path from the combined actuation mechanism to the front brake device. As with the aforementioned combined brake device of the related art, in use of the disc brake, it is required to extend the transmission path via the master cylinder attached to the handle member. Therefore, constraints are imposed on the layout of the transmission path. In view of this, the inventor conceived of employing a drum brake as the front brake device and directly connecting the combined brake cable to the drum brake so as to achieve shortening the transmission path. In other words, the inventor conceived of non-installation of the master cylinder by employing the drum brake as the front brake device so as to achieve shortening the transmission path.

However, even in no-installation of the master cylinder, the combined brake cable is connected to the front wheel. Because of this, in layout of the combined brake cable, it is required to consider change in posture of the combined brake cable to be caused by right-and-left turn motions and up-and-down stroke motions of the right and left suspensions and the front wheel. When the combined brake cable is largely changed in posture, interference with the right and left suspensions and the front wheel becomes problematic. Furthermore, when the right and left suspensions are coupled to the upper bracket and the lower bracket, it is required to consider the motions of the upper bracket and the lower bracket as well as those of the right and left suspensions.

Thus, in layout of the combined brake cable, it is required to consider interference with the front wheel, the upper bracket, the lower bracket and the right and left suspensions in turning of these movable members. However, in trying to avoid interference with these movable members too much, the combined brake cable is inevitably elongated as a drawback. Furthermore, when the combined brake cable is acutely bent by large change in posture thereof due to turning of the movable members, a concerning matter is deterioration in efficiency of transmitting the operating force by the combined brake cable.

In the straddled vehicle according to the present aspect, the drum brake is employed as the front brake device. Therefore, the combined brake cable can be directly connected to the combined brake device and the front brake device without via the master cylinder to be used in the disc brake. Accordingly, it is possible to shorten the transmission path from the combined brake device to the front brake device. Additionally, the first portion of the combined brake cable passes through the lateral side of the engine so as to overlap the engine as seen in the vehicle side view. Therefore, the combined brake cable can be shortened than that disposed to detour the engine so as not to overlap the engine as seen in the vehicle side view.

The second potion extends to cross the middle of the straddled vehicle in the vehicle width direction, while passing between the lower frame and the right and left suspensions in the vehicle back-and-forth direction. Thus, the combined brake cable includes the second portion extending in the vehicle width direction, whereby the combined brake cable can easily follow the motions of the right and left suspensions in the right-and-left direction. Accordingly, change in posture of the combined brake cable can be inhibited. As a result, interference between the combined brake cable and the right and left suspensions can be inhibited, and simultaneously, deterioration in transmission efficiency of the combined brake cable can be inhibited.

The second portion is located above the rear end of the front wheel. Therefore, interference between the combined brake cable and the front wheel can be inhibited. Furthermore, the second portion is located below at least part of the lower bracket. Therefore, the combined brake cable can be inhibited from interfering the lower bracket and the upper bracket.

The third portion extends downward and forward. Thus, the combined brake cable includes the third portion extending in the up-and-down direction, whereby the combined brake cable can easily follow the up-and-down motion produced by contraction and extension of the right and left suspensions. Accordingly, change in posture of the combined brake cable can be inhibited. As a result, interference between the combined brake cable and the right and left suspensions can be inhibited, and simultaneously, deterioration in transmission efficiency of the combined brake cable can be inhibited.

Furthermore, the second portion is attached to the vehicle body frame in the position located between the left edge of the left suspension and the right edge of the right suspension in the vehicle width direction. Accordingly, it is possible to inhibit a situation that the combined brake cable is deformed to an extremely large extent by the right-and-left and up-and-down motions of the right and left suspensions and the front wheel. Because of this, change in posture of the combined brake cable can be inhibited. As a result, interference between the combined brake cable and the movable members can be inhibited, and simultaneously, deterioration in transmission efficiency of the combined brake cable can be inhibited.

The engine may include a crankcase and a cylinder. The cylinder may be disposed at least in part above the crankcase. The first portion may overlap the cylinder as seen in the vehicle side view. In this case, the combined brake cable can be shortened.

The second portion may be attached to the vehicle body frame in a position located below a connected portion between the head pipe and the lower frame. In this case, the combined brake cable can be shortened.

The vehicle body frame may include a stay for attaching the second portion. The stay may protrude forward of a front edge of the lower frame. In this case, the combined brake cable can be shortened and the second portion can be attached easily.

The stay may be disposed in a position located closer to the lower frame than the right and left suspensions. In this case, the combined brake cable can be shortened.

A portion located uppermost in the combined brake cable may be located below the connected portion between the head pipe and the lower frame. In this case, the combined brake cable can be shortened.

The second portion may be located at least in part above an upper end of the engine. In this case, the third portion can be reliably set to have a large length in the up-and-down direction. Accordingly, the up-and-down motion produced by contraction and extension of the right and left suspensions can be effectively absorbed by the third portion. As a result, change in posture of the combined brake cable can be inhibited.

The left suspension may include a first left tube and a second left tube. The first left tube may be attached to the front wheel. The second left tube may be attached to the first left tube in a contractable/extendable manner, and may be attached to the lower bracket. The right suspension may include a first right tube and a second right tube. The first right tube may be attached to the front wheel. The second right tube may be attached to the first right tube in a contractable/extendable manner, and may be attached to the lower bracket. The second portion may be located at least in part above an upper end of the first left tube and an upper end of the first right tube. In this case, the third portion can be reliably set to have a large length in the up-and-down direction. Accordingly, the up-and-down motion produced by contraction and extension of the right and left suspensions can be effectively absorbed by the third portion. As a result, change in posture of the combined brake cable can be inhibited.

The straddled vehicle may further include a cable bracket. The cable bracket may be attached to the engine, and may support the first portion. In this case, the combined brake cable can be stably held by the cable bracket in a position overlapping the engine as seen in the vehicle side view.

When the handle member is not turned in the right and left direction by a driver and the straddled vehicle is in a straight moving state, the third portion may be located at least in part outside one of the right and left suspensions, which is disposed in the second region, in the vehicle width direction. In this case, the third portion is disposed to largely bulge outward in the vehicle width direction, whereby the up-and-down directional motions of the right and left suspensions can be effectively absorbed by deformation of the third portion.

The straddled vehicle may further include a brake lever, a front brake cable and a bundle member. The brake lever may be attached to the handle member. The front brake cable may connect the brake lever and the front brake device. The bundle member may bundle the front brake cable and the third portion together. In this case, it is possible to inhibit a situation that the third portion is actuated to an extremely large extent in actuation of the front wheel and the right and left suspensions.

The bundle member may bundle the front brake cable and the third portion together in a position located below an uppermost portion of the front wheel. In this case, the bundle member can be inhibited from excessively constraining the motion of the third portion.

When the handle member is in the straight moving state, the third portion may be located at least in part outside the front brake cable in the vehicle width direction. In this case, the third portion is disposed to largely bulge outward of the front brake cable in the vehicle width direction, whereby the up-and-down directional motions of the right and left suspensions can be effectively absorbed by deformation of the third portion. Additionally, the front brake cable extends from the brake lever to the front brake device. Hence, even when the front brake cable bulges to a smaller extent than the third portion, interference with the front wheel and the right and left suspensions is inhibited. Advantageous Effects of Invention

According to the present device described above, in a straddled vehicle, a transmission path from a brake pedal to a front brake device can be shortened, and simultaneously, change in posture of the combined brake cable can be inhibited when a movable member is moving. As a result, interference between a combined brake cable and a movable member can be inhibited and simultaneously, deterioration in transmission efficiency of the combined brake cable can be inhibited.

### BRIEF DESCRIPTION OF THE DRAWINGS

FIG. 1 a right side view of a straddled vehicle according to an exemplary embodiment.
FIG. 2 is a left side view of the straddled vehicle.
FIG. 3 is a front view of the straddled vehicle.
FIG. 4 is a right side view of part of the straddled vehicle.
FIG. 5 is a left side view of part of the straddled vehicle.
FIG. 6 is a schematic diagram showing a braking system of the straddled vehicle.
FIG. 7 is a front view of part of the straddled vehicle.
FIG. 8 is a diagram showing a state of the straddled vehicle when right and left suspensions are in a natural state and a handle member is turned rightward.
FIG. 9 is a diagram showing a state of the straddled vehicle when the right and left suspensions are in the natural state and the handle member is turned leftward.
FIG. 10 is a diagram showing a state of the straddled vehicle when the right and left suspensions are in a stroked state and the handle member is in a forward moving state.
FIG. 11 is a diagram showing a state of the straddled vehicle when the right and left suspensions are in the stroked state and the handle member is turned rightward.
FIG. 12 is a diagram showing a state of the straddled vehicle when the right and left suspensions are in the stroked state and the handle member is turned leftward.
FIG. 13 is a diagram showing a first example of a brake arm of a front brake device.
FIG. 14 is a diagram showing a second example of the brake arm of the front brake device.

### DESCRIPTION OF EMBODIMENTS

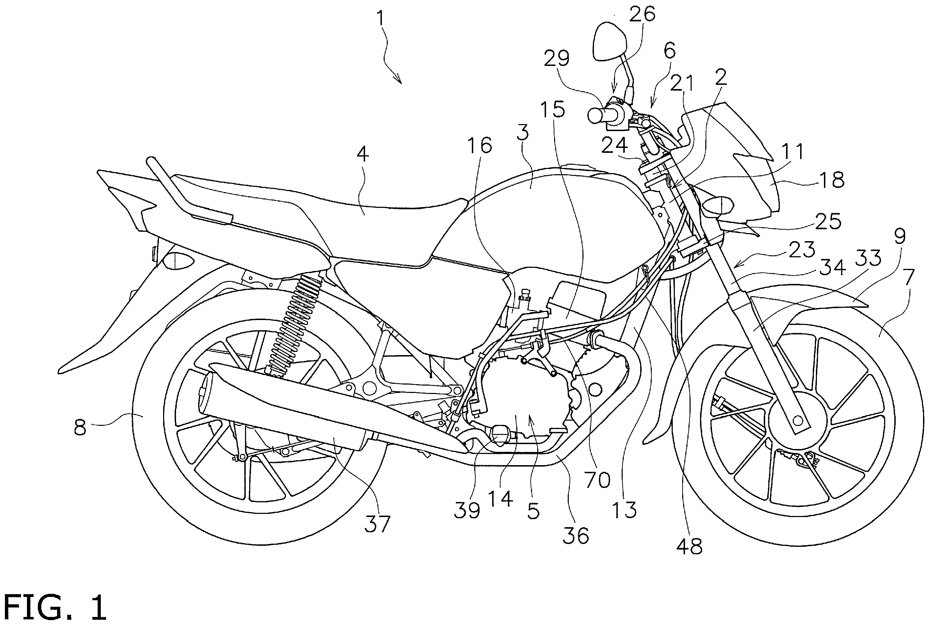

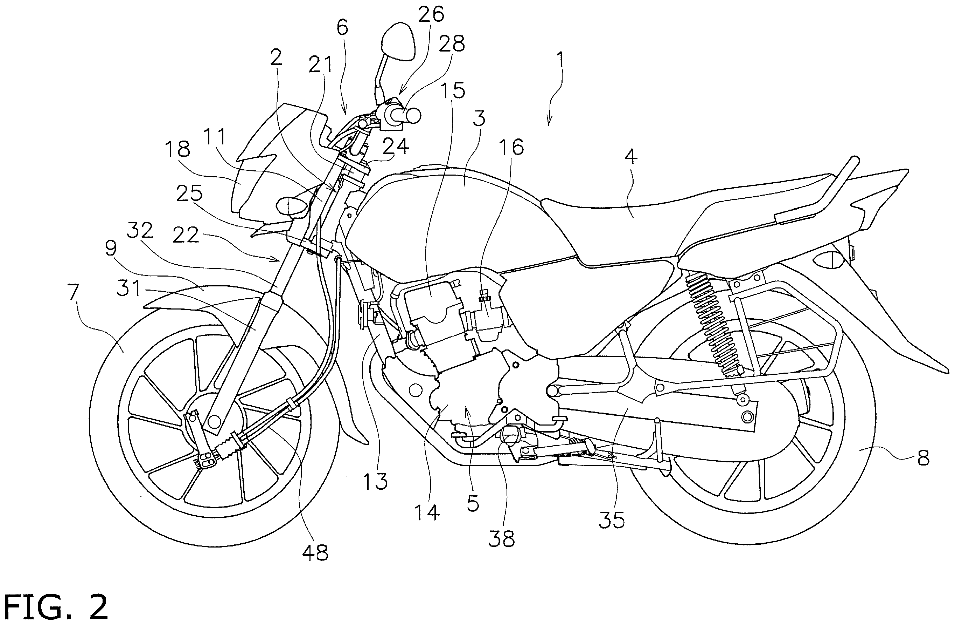

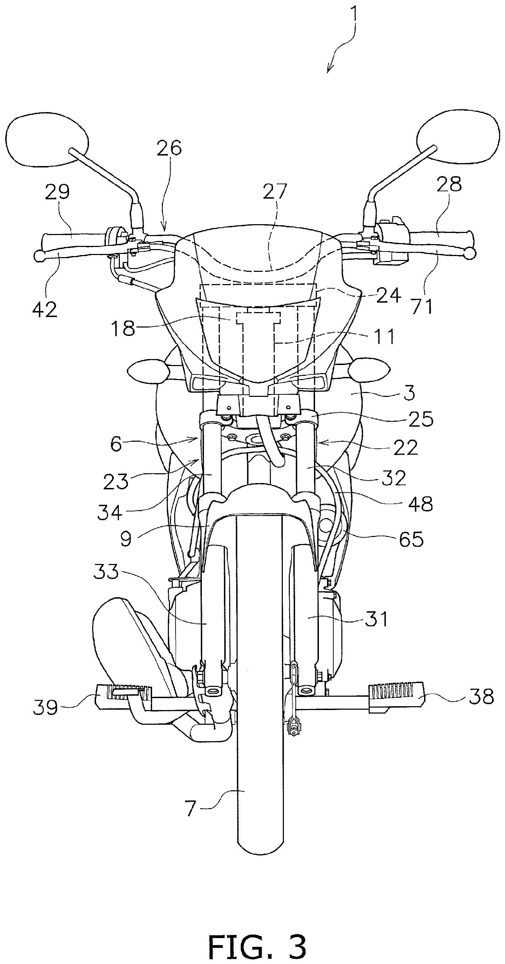

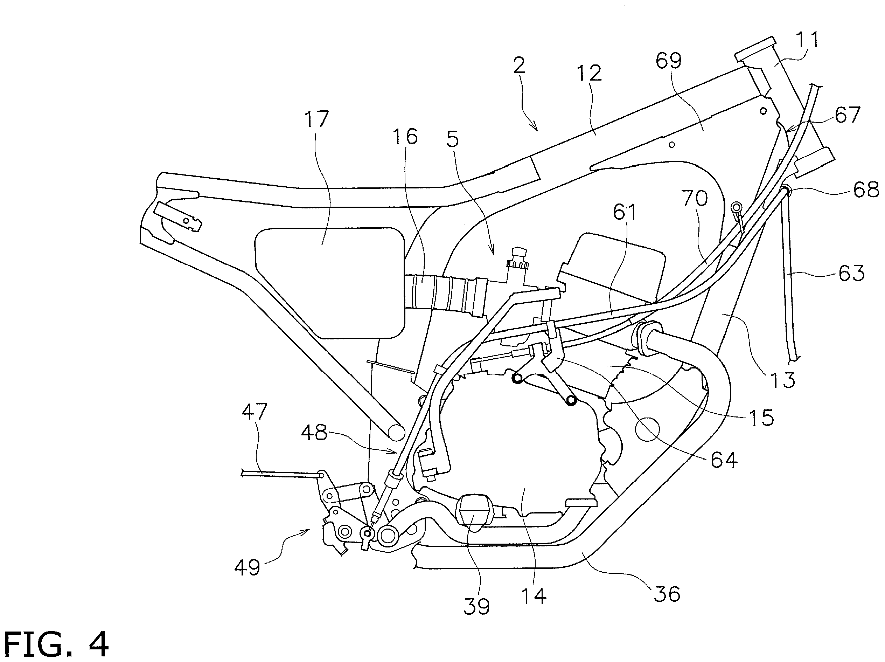

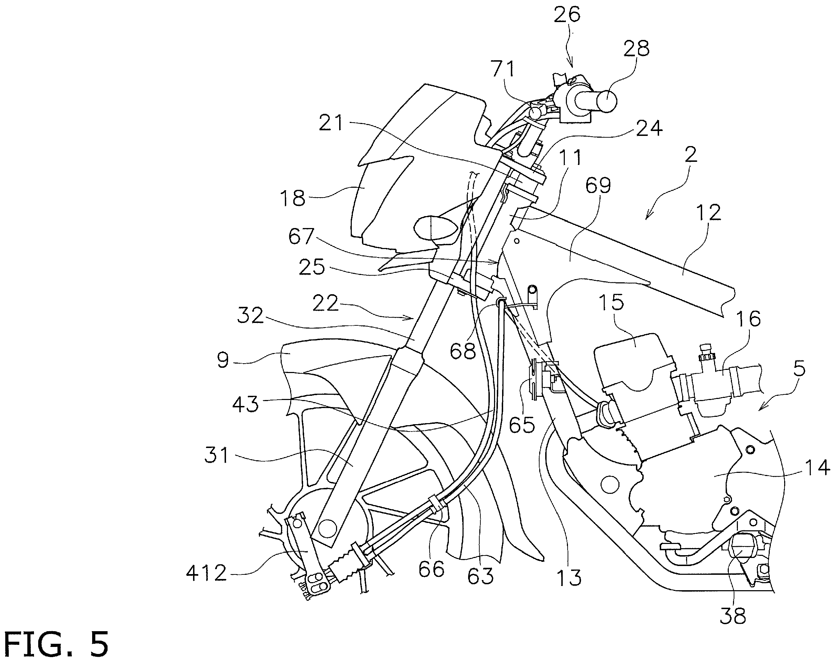

A straddled vehicle according to an exemplary embodiment will be hereinafter explained with reference to drawings. FIG. 1 is a right side view of a straddled vehicle 1 according to the exemplary embodiment. FIG. 2 is a left side view of the straddled vehicle 1. FIG. 3 is a front view of the straddled vehicle 1. FIG. 4 is a right side view of part of the straddled vehicle 1. FIG. 5 is a left side view of part of the straddled vehicle 1.

The straddled vehicle 1 according to the present exemplary embodiment is a motorcycle. As shown in FIGS. 1 to 3, the straddled vehicle 1 includes a vehicle body frame 2, a fuel tank 3, a seat 4, an engine 5, a steering device 6, a front wheel 7 and a rear wheel 8.

As shown in FIG. 4, the vehicle body frame 2 includes a head pipe 11, an upper frame 12 and a lower frame 13. The head pipe 11 is disposed in the middle of the vehicle in a vehicle width direction, and extends forward and downward. A headlight 18 is disposed in front of the head pipe 11. The upper frame 12 is connected to the head pipe 11 and extends therefrom backward. The lower frame 13 is disposed at least in part below the upper frame 12. The lower frame 13 is connected to the head pipe 11 and extends therefrom backward and downward.

It should be noted that front, rear, right and left directions are defined as indicating front, rear, right and left directions seen from a driver seated on the seat 4. The expression "a given frame extends from the head pipe 11" encompasses a condition that the head pipe 11 and the given frame are directly connected to each other and a condition that the head pipe 11 and the given frame are indirectly connected to each other. The term "connection" is not limited to direct connection and encompasses indirect connection. Additionally, the term "connection" is not limited to a condition that separate members are fixed to each other, and encompasses a condition that a plurality of portions in an integrated member continue to each other.

As shown in FIGS. 1 and 2, the fuel tank 3 is disposed behind the head pipe 11. The seat 4 is disposed behind the fuel tank 3. The engine 5 is disposed below the fuel tank 3. The engine 5 is supported by the vehicle body frame 2. The engine 5 is disposed below at least part of the upper frame 12, while being disposed backward of at least part of the lower frame 13.

The engine 5 may be located below the entirety of the upper frame 12. Alternatively, the engine 5 may be located below part of the upper frame 12, and may be located above the remainder of the upper frame 12. The engine 5 may be located backward of the entirety of the lower frame 13. Alternatively, the engine 5 may be located backward of part of the lower frame 13, and may be located forward of the remainder of the lower frame 13.

The engine 5 includes a crankcase 14, a cylinder 15 and an intake pipe 16. The cylinder 15 is disposed at least in part above an upper edge of the crankcase 14. The cylinder 15 may be entirely located above the upper edge of the crankcase 14. Part of the cylinder 15 may be located above the upper edge of the crankcase 14, whereas the remainder of the cylinder 15 may be located below the upper edge of the crankcase 14.

The intake pipe 16 is connected to the cylinder 15. As shown in FIG. 4, the intake pipe 16 extends backward from the cylinder 15, and is connected to an air cleaner 17. It should be noted that in the present exemplary embodiment, the cylinder 15 is defined as including a cylinder head and a cylinder body.

The steering device 6 is turnably supported by the head pipe 11. The steering device 6 includes a steering shaft 21, a left suspension 22, a right suspension 23, an upper bracket 24, a lower bracket 25 and a handle member 26. The steering shaft 21 is inserted into the head pipe 11, and extends forward and downward. The upper bracket 24 is disposed above the head pipe 11 and is connected to the steering shaft 21. The lower bracket 25 is disposed below the head pipe 11 and is connected to the steering shaft 21.

The handle member 26 is connected to the upper bracket 24 and is operable by the driver. As shown in FIG. 3, the handle member 26 includes a handlebar 27, a left grip 28 and a right grip 29. The left grip 28 is attached to the left end of the handlebar 27. The right grip 29 is attached to the right end of the handlebar 27. It should be noted that in the present exemplary embodiment, the handle member 26 is of a so-called bar handle type that the right and left grips are integrally attached to the upper bracket 24 through the handlebar 27. However, the handle member 26 may be of a so-called separate handle type that the right and left grips are separately attached to the upper bracket 24.

The right and left suspensions 23 and 22 extend forward and downward. The right and left suspensions 23 and 22 support the front wheel 7 such that the front wheel 7 is rotatable. The front wheel 7 is disposed forward of the engine 5. A front fender 9 is disposed above the front wheel 7. The right and left suspensions 23 and 22 support the front wheel 7 such that the front wheel 7 is movable in the up-and-down direction. The left suspension 22 is disposed laterally leftward of the front wheel 7. The left suspension 22 is connected to the upper bracket 24 and the lower bracket 25, while being disposed in a position located laterally leftward of the head pipe 11. The right suspension 23 is disposed laterally rightward of the front wheel 7. The right suspension 23 is connected to the upper bracket 24 and the lower bracket 25, while being disposed in a position located laterally rightward of the head pipe 11.

The left suspension 22 includes a first left tube 31 and a second left tube 32. The first left tube 31 is attached to the front wheel 7. The second left tube 32 is attached to the first left tube 31 in a contractable/extendable manner, and is attached to the lower bracket 25. The right suspension 23 includes a first right tube 33 and a second right tube 34. The first right tube 33 is attached to the front wheel 7. The second right tube 34 is attached to the first right tube 33 in a contractable/extendable manner, and is attached to the lower bracket 25.

In the present exemplary embodiment, the right and left suspensions 23 and 22 are of a so-called upright type. In other words, in the present exemplary embodiment, the first right and left tubes 33 and 31 are outer tubes, whereas the second right and left tubes 34 and 32 are inner tubes to be inserted into the outer tubes. However, the right and left suspensions 23 and 22 may be of a so-called inverted type. In other words, the second right and left tubes 34 and 32 may be outer tubes, whereas the first right and left tubes 33 and 31 may be inner tubes to be inserted into the outer tubes.

The steering device 6 and the front wheel 7 are turned with respect to the head pipe 11 in conjunction with rotation of the handle member 26 in the right and left direction. In other words, the steering shaft 21, the upper bracket 24, the lower bracket 25, the left suspension 22, the right suspension 23 and the front wheel 7 are turned in the right and left direction in conjunction with the motion of the handle member 26.

As shown in FIG. 2, the rear wheel 8 is supported by the vehicle body frame 2 through a swing arm 35. The swing arm 35 is swingably attached to the vehicle body frame 2. The rear wheel 8 is disposed backward of the engine 5.

As shown in FIG. 1, the straddled vehicle 1 includes an exhaust pipe 36 and a muffler 37. The exhaust pipe 36 is connected to the cylinder 15 of the engine 5. The exhaust pipe 36 extends from the cylinder 15, then passes through a position below the engine 5, and extends backward. The exhaust pipe 36 is connected to the muffler 37.

The straddled vehicle 1 includes a left step 38 and a right step 39. The right and left steps 39 and 38 are members on which the driver puts his/her feet. The left step 38 protrudes laterally leftward of the engine 5. The right step 39 protrudes laterally rightward of the engine 5. The right and left steps 39 and 38 are attached to the bottom surface of the engine 5. Alternatively, the right and left steps 39 and 38 may be attached to the vehicle body frame 2.

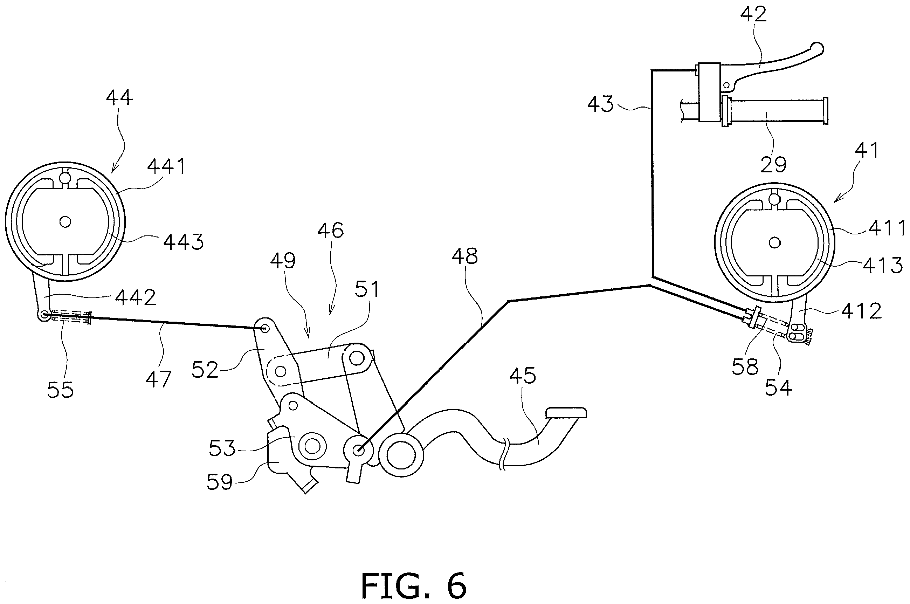

Next, a braking system of the straddled vehicle 1 will be explained. FIG. 6 is a schematic diagram showing a configuration of the braking system. As shown in FIG. 6, the braking system includes a front brake device 41, a brake lever 42, a front brake cable 43, a rear brake device 44, a brake pedal 45 and a combined brake device 46.

The front brake device 41 brakes the front wheel 7 in response to operating the brake lever 42. The front brake device 41 is a drum brake attached to the front wheel 7. The front brake device 41 includes a drum 411, a brake arm 412 and a brake shoe 413. The drum 411 is attached to the front wheel 7, and is rotated together with the front wheel 7. The front brake cable 43 connects the brake lever 42 and the front brake device 41. The brake lever 42 is attached to the handle member 26. The brake lever 42 is disposed in front of the right grip 29. The front brake cable 43 pulls the brake arm 412 in conjunction with the brake lever 42 operated by the driver, whereby the brake shoe 413 is pressed onto the drum 411. Accordingly, the front wheel 7 is braked.

The rear brake device 44 brakes the rear wheel 8 in response to operating the brake pedal 45. The rear brake device 44 is a drum brake attached to the rear wheel 8. The rear brake device 44 includes a drum 441, a brake arm 442 and a brake shoe 443. The drum 441 is attached to the rear wheel 8 and is rotated together with the rear wheel 8. The brake pedal 45 is a member to be operated by the driver with his/her foot. The brake pedal 45 is rotatably attached to the vehicle body frame 2. The tread surface of the brake pedal 45 is disposed, for instance, in front of the right step 39. The brake pedal 45 is connected to a rear brake transmission member 47 (to be described) through the combined brake device 46. The rear brake transmission member 47 pulls the brake arm 442 in conjunction with the brake pedal 45 operated by the driver, whereby the brake shoe 443 is pressed onto the drum 441.

The combined brake device 46 causes the rear brake device 44 and the front brake device 41 to be actuated in a linked manner. The combined brake device 46 includes the rear brake transmission member 47, a combined brake cable 48 and a combined actuation mechanism 49. The rear brake transmission member 47 is connected to the brake arm 442 of the rear brake device 44. The rear brake transmission member 47 is, for instance, a brake rod. It should be noted that the rear brake transmission member 47 may be a brake cable.

The combined brake cable 48 is connected to the brake arm 412 of the front brake device 41. The combined actuation mechanism 49 is connected to the brake pedal 45. The combined actuation mechanism 49 is connected to the front brake device 41 through the combined brake cable 48. The combined actuation mechanism 49 is connected to the rear brake device 44 through the rear brake transmission member 47. The combined actuation mechanism 49 transmits the motion of the brake pedal 45 to the rear brake device 44 and the front brake device 41.

The combined actuation mechanism 49 is disposed backward of at least part of the engine 5. The combined actuation mechanism 49 may be disposed backward of the entirety of the engine 5. Alternatively, the combined actuation mechanism 49 may be disposed backward of part of the engine 5, and may be disposed forward of the remainder of the engine 5.

The combined actuation mechanism 49 includes a first link member 51, an equalizer 52 and a second link member 53. The first link member 51 is rotatably connected to the brake pedal 45. The first link member 51 is rotatably connected to the equalizer 52. The equalizer 52 is connected to the rear brake transmission member 47. The equalizer 52 is rotatably connected to the second link member 53. The second link member is connected to the combined brake cable 48. In other words, the equalizer 52 is connected to the combined brake cable 48 through the second link member 53. The second link member 53 is attached to the vehicle body frame 2 through a bracket 59. The second link member 53 is rotatably connected to the bracket 59.

The motion of the brake pedal 45 is transmitted to the equalizer 52 through the first link member 51. The equalizer 52 pulls the rear brake transmission member 47 in conjunction with the motion of the brake pedal 45, and simultaneously, actuates the second link member 53 in a direction that the front brake cable 43 is pulled. Accordingly, the equalizer 52 distributes the operating force of the brake pedal 45 to the front brake device 41 and the rear brake device 44.

It should be noted that the front brake device 41 includes a first front urging member 54 and a second front urging member 58. The first front urging member 54 is attached to the combined brake cable 48. The second front urging member 58 is attached to the front brake cable 43. The first and second front urging members 54 and 58 urge the brake arm 412 in a direction to turn the front brake device 41 into an unbraked state. Accordingly, when the brake lever 42 and the brake pedal 45 are in unbraking positions, the front brake device 41 is kept in the unbraked state by the urging force of the first front urging member 54 and that of the second front urging member 58. When either the brake lever 42 or the brake pedal 45 is operated to a braking position, the brake arm 412 is actuated against the urging force of either the first front urging member 54 or the second front urging member 58, whereby the front brake device 41 is turned into a braked state. It should be noted that in the present exemplary embodiment, the first and second front urging members 54 and 58 are coil springs. However, any urging members other than the coil springs may be used as the first and second front urging members 54 and 58.

The rear brake device 44 includes a rear urging member 55. The rear urging member 55 urges the brake arm 442 in a direction to turn the rear brake device 44 into an unbraked state. Accordingly, when the brake pedal 45 is in the unbraking position, the rear brake device 44 is kept in the unbraked state by the urging force of the rear urging member 55. When the brake pedal 45 is operated to the braking position, the brake arm 442 is actuated against the urging force of the rear urging member 55, whereby the rear brake device 44 is turned into a braked state. It should be noted that in the present exemplary embodiment, the rear urging member 55 of the rear brake device 44 is a coil spring. However, any urging member other than the coil spring may be used as the rear urging member 55.

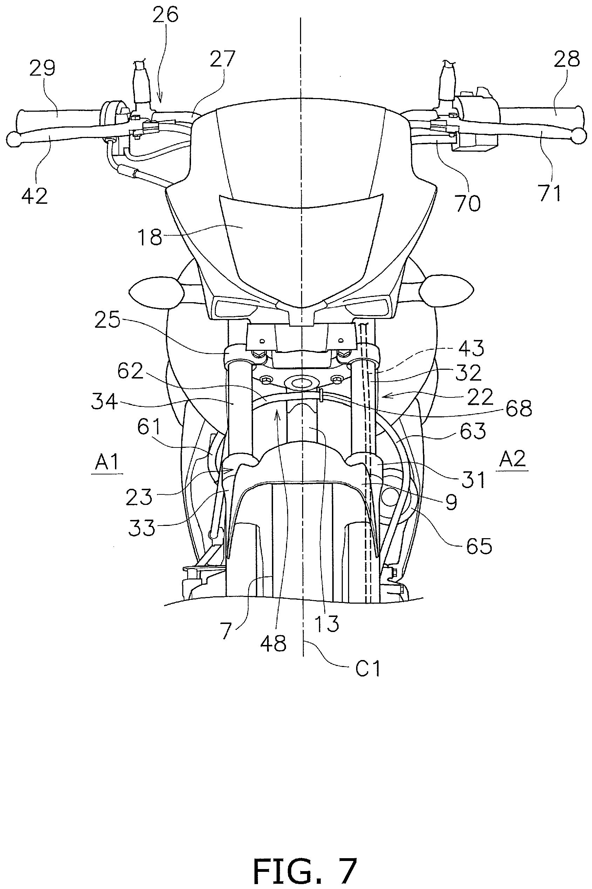

Next, the layout of the combined brake cable 48 will be explained. FIG. 7 is a front view of part of the straddled vehicle 1. As shown in FIG. 7, the combined brake cable 48 includes a first portion 61, a second portion 62 and a third portion 63.

In the following explanation, as shown in FIG. 7, a first region A1 is defined as one of the regions located on the both vehicle width directional sides of a center line C1 passing through the middle of the vehicle in the vehicle width direction, whereas a second region A2 is defined as the other of the regions. It should be noted that in the present exemplary embodiment, the first region A1 is a region located laterally rightward of the center line C1, whereas the second region A2 is a region located laterally leftward of the center line C1. However, the first region A1 may be the region located laterally leftward of the center line C1, whereas the second region A2 may be the region located laterally rightward of the center line C1.

The first portion 61 is disposed in the first region A1. As shown in FIG. 4, the first portion 61 extends forward and upward from the combined actuation mechanism 49. The first portion 61 passes through a lateral side of the engine 5 so as to overlap the engine 5 as seen in a vehicle side view. The first portion 61 extends to a position that is located above the rear end of the front wheel 7 and is also located below at least part of the lower bracket 25.

The first portion 61 passes through a position located behind the crankcase 14 and a position located above the crankcase 14. The first portion 61 does not overlap the crankcase 14 as seen in the vehicle side view. The first portion 61 passes through a lateral side of the cylinder 15, and thus, overlaps the cylinder 15 as seen in the vehicle side view. A cable bracket 64 is attached to the crankcase 14. The cable bracket 64 extends upward from the crankcase 14 as seen in the vehicle side view. The first portion 61 is supported by the cable bracket 64 in a position located above the crankcase 14 as seen in the vehicle side view. The first portion 61 extends to a position that is located above an uppermost portion of the front wheel 7 and is also located below the lower end of a connected portion 67 between the head pipe 11 and the lower frame 13.

The third portion 63 is disposed in the second region A2. As shown in FIG. 5, the third portion 63 extends downward and forward from the position that is located above the rear end of the front wheel 7 and is also located below at least part of the lower bracket 25. The third portion 63 extends downward and forward from the position that is located above the uppermost portion of the front wheel 7 and is also located below the lower end of the connected portion 67 between the head pipe 11 and the lower frame 13. The third portion 63 is connected to the brake arm 412 of the front brake device 41. A horn 65 is attached to the lower frame 13, and the third portion 63 is disposed to pass ahead of the horn 65.

The third portion 63 is bundled together with the front brake cable 43 by a bundle member 66. The bundle member 66 bundles the front brake cable 43 and the third portion 63 together in a position located below the uppermost portion of the front wheel 7. The bundle member 66 bundles the front brake cable 43 and the third portion 63 together in a position located forward of the rear end of the front wheel 7.

As shown in FIG. 7, when the handle member 26 is in a straight moving state, the first portion 61 is located at least in part outside the right suspension 23 in the vehicle width direction as seen in a vehicle front view. When the handle member 26 is in the straight moving state, the third portion 63 is located at least in part outside the left suspension 22 in the vehicle width direction as seen in the vehicle front view. It should be noted that the term "outside in the vehicle width direction" means a side separating from the center line C1 in the vehicle width direction.

Detailedly, when the handle member 26 is in the straight moving state, the first portion 61 is located at least in part laterally rightward of the right edge of the right suspension 23 as seen in the vehicle front view. When the handle member 26 is in the straight moving state, the third portion 63 is located at least in part laterally leftward of the left edge of the left suspension 22 as seen in the vehicle front view.

When the handle member 26 is in the straight moving state, the first portion 61 has a shape bulging laterally rightward from the right edge of the right suspension 23 as seen in the vehicle front view. The first portion 61 extends upward and leftward in a position located higher than a rightmost portion of the first portion 61. The first portion 61 extends downward and leftward in a position located lower than the rightmost portion of the first portion 61. When the handle member 26 is in the straight moving state, the third portion 63 has a shape bulging laterally leftward from the left edge of the left suspension 22 as seen in the vehicle front view. The third portion 63 extends upward and rightward in a position located higher than a leftmost portion of the third portion 63. The third portion 63 extends downward and rightward in a position located lower than the leftmost portion of the third portion 63.

When the handle member 26 is in the straight moving state, the third portion 63 is located at least in part outside the front brake cable 43 in the vehicle width direction as seen in the vehicle front view. Detailedly, when the handle member 26 is in the straight moving state, the third portion 63 is located at least in part laterally leftward of the front brake cable 43 a seen in the vehicle front view.

The second portion 62 is connected to the first portion 61 and the third portion 63. The second portion 62 extends to cross the middle of the vehicle in the vehicle width direction, while passing between the lower frame 13 and the right and left suspensions 23 and 22 in a vehicle back-and-forth direction. The second portion 62 is located below at least part of the lower bracket 25.

The second portion 62 is located forward of the lower frame 13, while being located backward of the right and left suspensions 23 and 22. The second portion 62 is located at least in part above the upper end of the engine 5. The second portion 62 is located at least in part above the upper end of the first left tube 31 and that of the first right tube 33. The second portion 62 is located at least in part above an uppermost portion of the front fender 9 in full stroke of the right and left suspensions 23 and 22.

The second portion 62 may be entirely located above the upper end of the engine 5. Alternatively, part of the second portion 62 may be located above the upper end of the engine 5, whereas the remainder of the second portion 62 may be located below the upper end of the engine 5. The second portion 62 may be entirely located above the upper end of the first left tube 31 and that of the first right tube 33. Alternatively, part of the second portion 62 may be located above the upper end of the first left tube 31 and that of the first right tube 33, whereas the remainder of the second portion 62 may be located below the upper end of the first left tube 31 and that of the first right tube 33.

The second portion 62 overlaps the right and left suspensions 23 and 22 as seen in the vehicle front view. Detailedly, the second portion 62 overlaps the second left tube 32 and the second right tube 34 as seen in the vehicle front view. The second portion 62 overlaps the lower frame 13 as seen in the vehicle front view. The second portion 62 is located above the uppermost portion of the front wheel 7. The second portion 62 is located below the headlight 18. The second portion 62 has an upwardly bulging shape as seen in the vehicle front view. The second portion 62 extends leftward and downward in a position located leftward of an upmost portion of the second portion 62. The second portion 62 extends rightward and downward in a position located rightward of the upmost portion of the second portion 62.

The uppermost portion of the second portion 62 is located below the connected portion 67 between the head pipe 11 and the lower frame 13. The uppermost portion of the second portion 62 is a portion located uppermost among the portions composing the combined brake cable 48. Therefore, the portion, located uppermost among the portions composing the combined brake cable 48, is located below the connected portion 67 between the head pipe 11 and the lower frame 13.

As shown in FIGS. 4 and 5, the second portion 62 is attached to the lower frame 13 through a stay 68. As shown in FIG. 5, the stay 68 is attached to the lower frame 13 through a gusset 69. The gusset 69 is attached to the lower frame 13 and the upper frame 12. It should be noted that the stay 68 may be directly attached to the lower frame 13. The stay 68 may be directly attached to the upper frame 12. Alternatively the stay 68 may be directly attached to the head pipe 11. The stay 68 protrudes forward of the front edge of the lower frame 13. The stay 68 is disposed in a positon located closer to the lower frame 13 than the right and left suspensions 23 and 22 in the vehicle back-and-forth direction. The stay 68 covers the second portion 62 from above, below and front. The stay 68 restricts the second portion 62 from moving upward, downward and forward.

The second portion 62 is attached to the lower frame 13 in a position located below the connected portion 67 between the head pipe 11 and the lower frame 13. The second portion 62 is attached to the lower frame 13 in a position located above the uppermost portion of the front wheel 7. The second portion 62 is attached to the lower frame 13 in a position between the left edge of the left suspension 22 and the right edge of the right suspension 23 in the vehicle width direction.

It should be noted that as shown in FIG. 4, a clutch cable 70 is supported together with the combined brake cable 48 by the cable bracket 64. The clutch cable 70 passes through a lateral side of the engine 5 in the first region A1, and extends forward and upward. The clutch cable 70 passes ahead of the head pipe 11, and is connected to a clutch lever 71 in the second region A2. The clutch lever 71 is disposed in front of the left grip 28, and is attached to the handle member 26.

In the straddled vehicle 1 according to the present exemplary embodiment explained above, the drum brake is employed as the front brake device 41. Therefore, the combined brake cable 48 can be directly connected to the combined brake device 46 and the front brake device 41 without through a master cylinder to be used in a disc brake. Accordingly, it is possible to shorten a transmission path from the combined brake device 46 to the front brake device 41.

Additionally, the first portion 61 of the combined brake cable 48 passes through a lateral side of the engine 5 so as to overlap the engine 5 as seen in the vehicle side view. Therefore, the combined brake cable 48 can be shortened than that disposed to detour the engine 5 so as not to overlap the engine 5 as seen in the vehicle side view.

The second portion 62 extends to cross the middle of the vehicle in the vehicle width direction, while passing between the lower frame 13 and the right and left suspensions 23 and 22 in the vehicle back-and-forth direction. Thus, the combined brake cable 48 includes the second portion 62 extending in the vehicle width direction, whereby the combined brake cable 48 can easily follow the motions of the right and left suspensions 23 and 22 in the right-and-left direction. Accordingly, change in posture of the combined brake cable 48 can be inhibited. As a result, interference between the combined brake cable 48 and the right and left suspensions 23 and 22 can be inhibited, and simultaneously, deterioration in transmission efficiency of the combined brake cable 48 can be inhibited.

The second portion 62 is located above the rear end of the front wheel 7. Therefore, interference between the combined brake cable 48 and the front wheel 7 can be inhibited. Furthermore, the second portion 62 is located below at least part of the lower bracket 25. Therefore, the combined brake cable 48 can be inhibited from interfering the lower bracket 25 and the upper bracket 24.

The third portion 63 extends downward and forward. Thus, the combined brake cable 48 includes the third portion 63 extending in the up-and-down direction, whereby the combined brake cable 48 can easily follow the up-and-down motion produced by contraction and extension of the right and left suspensions 23 and 22. Accordingly, change in posture of the combined brake cable 48 can be inhibited. As a result, interference between the combined brake cable 48 and the right and left suspensions 23 and 22 can be inhibited, and simultaneously, deterioration in transmission efficiency of the combined brake cable 48 can be inhibited.

Furthermore, the second portion 62 is attached to the lower frame 13 in the position located between the left edge of the left suspension 22 and the right edge of the right suspension 23 in the vehicle width direction. Accordingly, it is possible to inhibit a situation that the combined brake cable 48 is deformed to an extremely large extent by the right-and-left and up-and-down motions of the right and left suspensions 23 and 22 and the front wheel 7. Because of this, change in posture of the combined brake cable 48 can be inhibited. As a result, interference between the combined brake cable 48 and the movable members can be inhibited, and simultaneously, deterioration in transmission efficiency of the combined brake cable 48 can be inhibited.

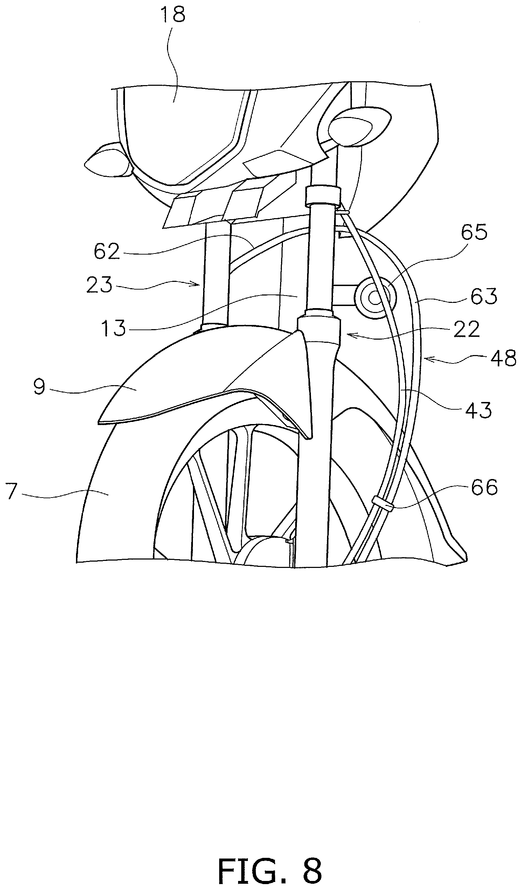

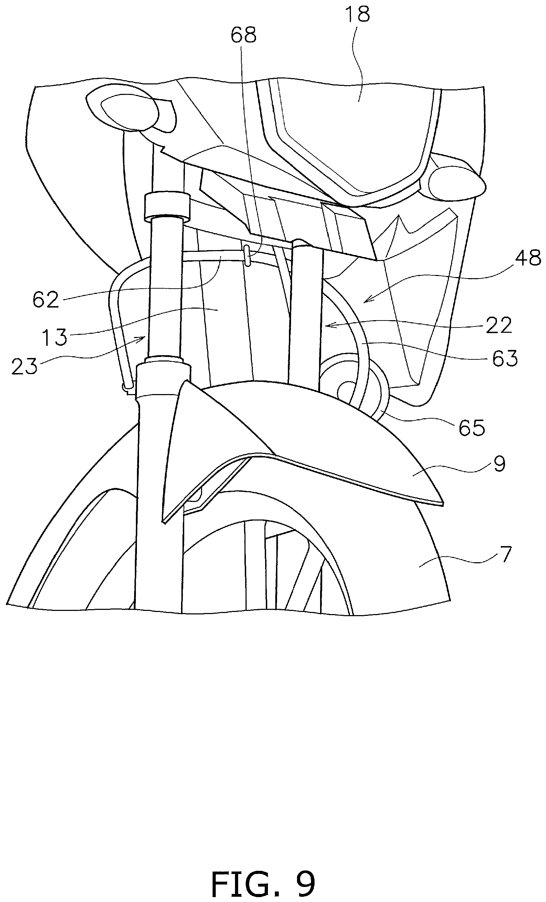

For example, FIG. 8 shows a state of the straddled vehicle 1 when the handle member 26 is turned rightward while the right and left suspensions 23 and 22 are in a natural state. FIG. 9 shows a state of the straddled vehicle 1 when the handle member 26 is turned leftward while the right and left suspensions 23 and 22 are in the natural state. The natural state means a state of the right and left suspensions 23 and 22 when any load, other than the own weight of the straddled vehicle 1, does not act on the straddled vehicle 1. FIG. 7 mentioned above shows a state of the straddled vehicle 1 when the handle member 26 is in the straight moving state while the right and left suspensions 23 and 22 are in the natural state.

As shown in FIGS. 7 to 9, when the handle member 26 is turned right-and-left directionally from the straight moving state, the combined brake cable 48 is deformed mainly at the second portion 62 extending in the vehicle width direction and part of the third portion 63 located in the vicinity of the second portion 62, whereby the combined brake cable 48 follows the right-and-left directional motions of the right and left suspensions 23 and 22. Accordingly, change in posture of the combined brake cable 48 can be inhibited. As a result, the combined brake cable 48 can be inhibited from interfering the right and left suspensions 23 and 22 and the other movable members, and simultaneously, deterioration in transmission efficiency of the combined brake cable 48 can be inhibited.

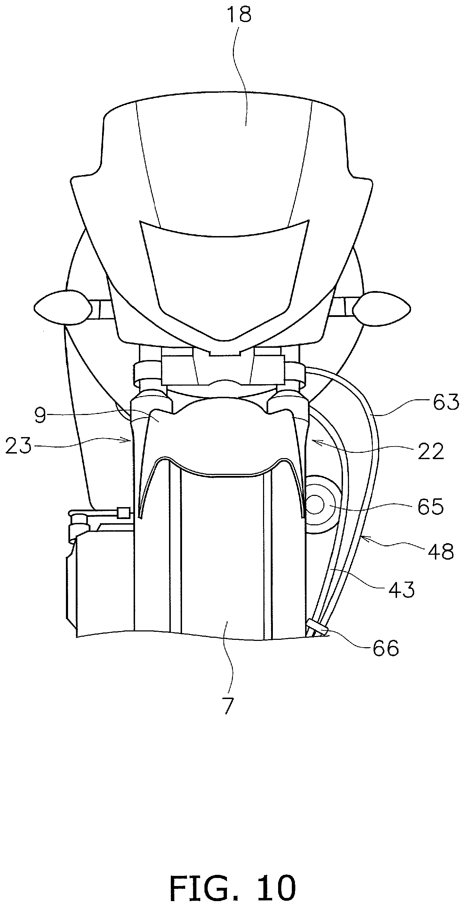

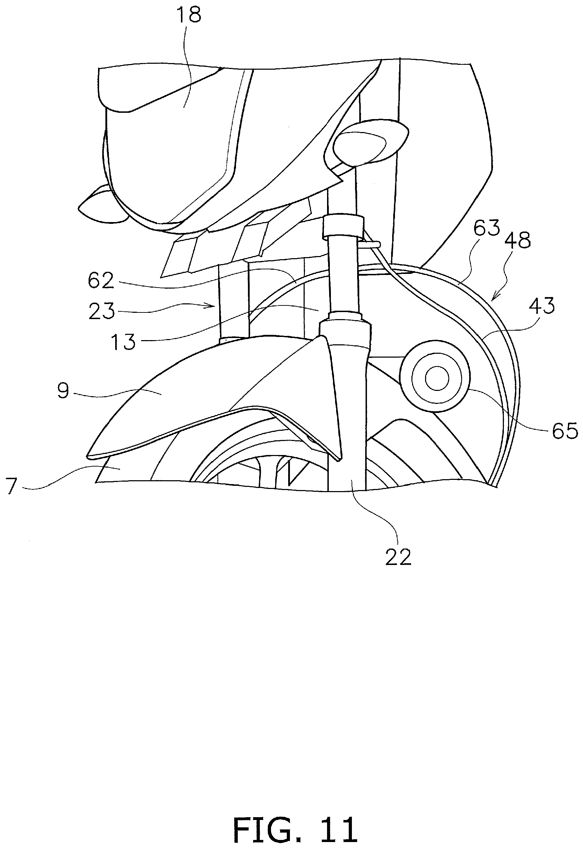

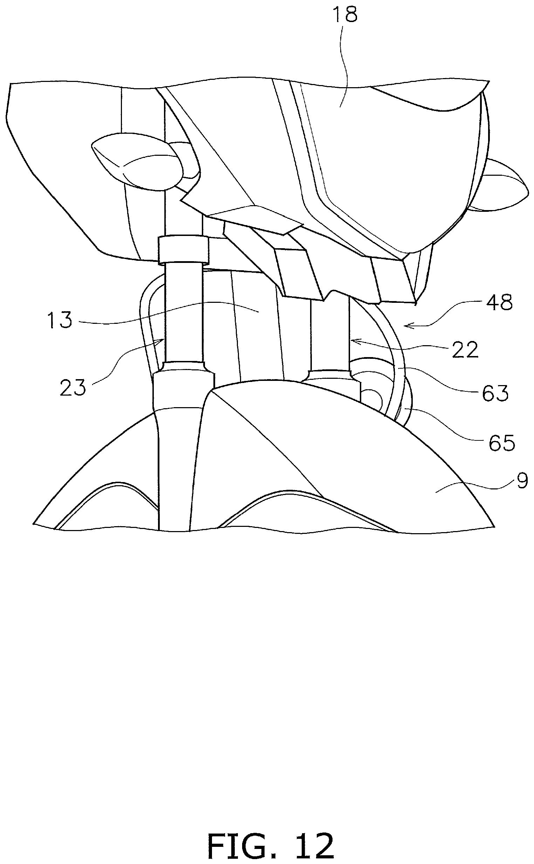

FIG. 10 shows a state of the straddled vehicle 1 when the handle member 26 is in the straight moving state while the right and left suspensions 23 and 22 are in a stroked state. The stroked state means a state of the right and left suspensions 23 and 22 contracted from the natural state. FIG. 11 shows a state of the straddled vehicle 1 when the handle member 26 is turned rightward while the right and left suspensions 23 and 22 are in the stroked state. FIG. 12 shows a state of the straddled vehicle 1 when the handle member 26 is turned leftward while the right and left suspensions 23 and 22 are in the stroked state.

As shown in FIGS. 7 and 10, when the right and left suspensions 23 and 22 are contracted from the natural state to the stroked state while the handle member 26 is in the straight moving state, the combined brake cable 48 is deformed mainly at the third portion 63 extending in the up-and-down direction, whereby the combined brake cable 48 follows the up-and-down directional motions of the right and left suspensions 23 and 22. Accordingly, change in posture of the combined brake cable 48 can be inhibited. As a result, the combined brake cable 48 can be inhibited from interfering the right and left suspensions 23 and 22 and the other movable members, and simultaneously, deterioration in transmission efficiency of the combined brake cable 48 can be inhibited.

As shown in FIGS. 8 and 11, similarly to the above, when the right and left suspensions 23 and 22 are contracted from the natural state to the stroked state while the handle member 26 is being turned rightward, the combined brake cable 48 is also deformed mainly at the third portion 63 extending in the up-and-down direction, whereby the combined brake cable 48 follows the up-and-down directional motions of the right and left suspensions 23 and 22. As shown in FIGS. 9 and 12, similarly to the above, when the right and left suspensions 23 and 22 are contracted from the natural state to the stroked state while the handle member 26 is being turned leftward, the combined brake cable 48 is also deformed mainly at the third portion 63 extending in the up-and-down direction, whereby the combined brake cable 48 follows the up-and-down directional motions of the right and left suspensions 23 and 22. Accordingly, change in posture of the combined brake cable 48 can be inhibited. As a result, the combined brake cable 48 can be inhibited from interfering the right and left suspensions 23 and 22 and the other movable members, and simultaneously, deterioration in transmission efficiency of the combined brake cable 48 can be inhibited.

One exemplary embodiment of the present invention has been explained above. However, the present invention is not limited to the aforementioned exemplary embodiment, and a variety of changes can be made without departing from the gist of the present invention.

The straddled vehicle 1 is not limited to a motorcycle, and encompasses other types of vehicle such as an all-terrain vehicle. The number of the front wheels (7) is not limited to one, and alternatively, may be two or greater. The number of the rear wheels (8) is not limited to one, and alternatively, may be two or greater.

The configuration of the combined brake device 46 is not limited to that of the aforementioned exemplary embodiment, and may be changed. For example, the second link member 53 may be omitted in the combined actuation mechanism 49. A heretofore known combined actuation mechanism may be used instead of the aforementioned combined actuation mechanism 49.

The layout of the combined brake cable 48 may be changed. In other words, the arrangement of the first portion 61 may be changed. The arrangement of the second portion 62 may be changed. The arrangement of the third portion 63 may be changed.

For example, an object, overlapped by the first portion 61 as seen in the vehicle side view, is not limited to the cylinder 15, and alternatively, may be any other component of the engine 5. The first portion 61 may overlap the intake pipe 16 as seen in the vehicle side view. The first portion 61 may overlap the crankcase 14 as seen in the vehicle side view.

The first portion 61 may be arbitrarily configured as long as the upper end thereof is located above and forward of the lower end thereof. In other words, the first portion 61 may include a portion extending in a direction different from the upward and forward direction. The second portion 62 may include a portion extending in a direction different from the vehicle width direction. The third portion 63 may be arbitrarily configured as long as the lower end thereof is located below and forward of the upper end thereof. In other words, the third portion 63 may include a portion extending in a direction different from the downward and forward direction.

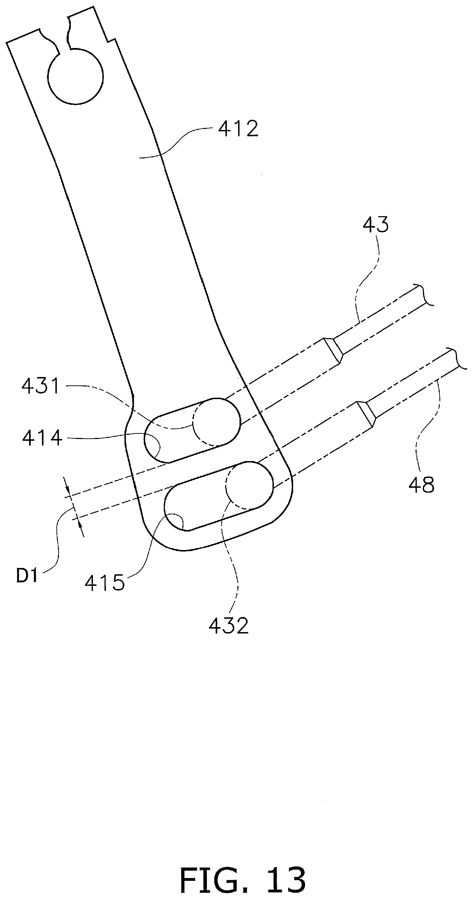

FIG. 13 is a diagram showing a first example of the brake arm 412 of the front brake device 41. The brake arm 412 includes a first elongated hole 414 and a second elongated hole 415. The first elongated hole 414 is disposed above the second elongated hole 415. A first pin 431, connected to the front brake cable 43, is inserted into the first elongated hole 414. A second pin 432, connected to the combined brake cable 48, is inserted into the second elongated hole 415.

Each of the first and second elongated holes 414 and 415 extends straight. An interval D1 between the first elongated hole 414 and the second elongated hole 415 is constant. In other words, the edge of the first elongated hole 414 opposed to the second elongated hole 415 and that of the second elongated hole 415 opposed to the first elongated hole 414 extend straight in parallel to each other.

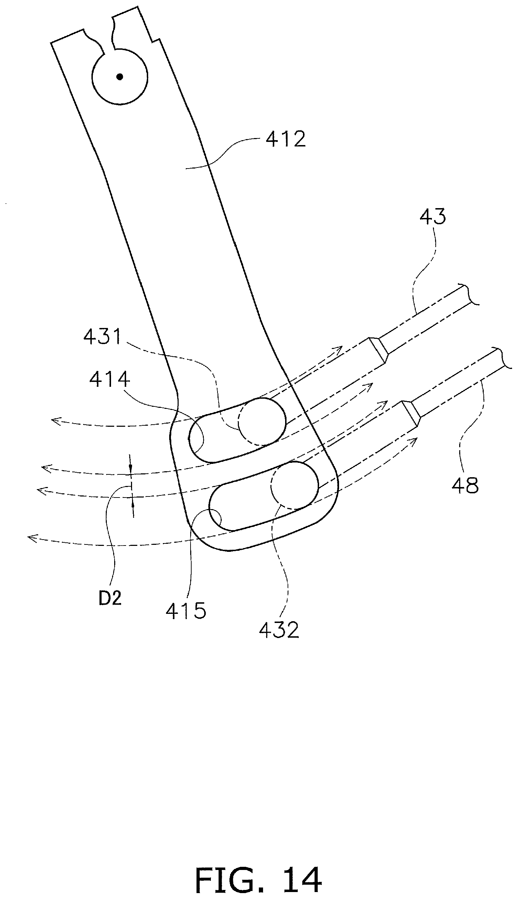

FIG. 14 is a diagram showing a second example of the brake arm 412 of the front brake device 41. In the brake arm 412 according to the second example, each of the first and second elongated holes 414 and 415 has a shape curved along the turning direction of the brake arm 412. Additionally, an interval D2 between the first elongated hole 414 and the second elongated hole 415 is constant. In other words, the edge of the first elongated hole 414 opposed to the second elongated hole 415 and that of the second elongated hole 415 opposed to the first elongated hole 414 are curved along the turning direction of the brake arm 412 in parallel to each other.

According to the brake arm 412 described above, when one of the front brake cable 43 and the combined brake cable 48 is actuated while the other is not, change in position of the other by the motion of the brake arm 412 is inhibited. Accordingly, the front brake cable 43 and the combined brake cable 48 can be enhanced in durability and reliability.

The terms and expressions, as used herein, are provided for the purpose of explanation, not of limitation to interpretation. It is to be recognized that there is no intention to exclude any equivalents of the features herein illustrated and described, and various modifications are possible within the scope claimed in the appended claims. The present invention can be embodied in many different forms. The present disclosure should be considered to provide the principle embodiments of the present invention. Those embodiments are herein described with the understanding of not intending to limit the present invention to the embodiments herein described and/or illustrated. Thus, the present invention is not to be limited to those embodiments herein described. A limitation in a claim should be broadly interpreted based on terms used in the claim, and should not be limited to any of the embodiments described in the present specification or during prosecution of the present application.

### INDUSTRIAL APPLICABILITY

According to the present invention, in a straddled vehicle, a transmission path from a brake pedal to a front brake device can be shortened, and simultaneously, change in posture of the combined brake cable can be inhibited when a movable member is moving. As a result, interference between a combined brake cable and a movable member can be inhibited and simultaneously, deterioration in transmission efficiency of the combined brake cable can be inhibited.

### REFERENCE SIGNS LIST

- 5: Engine

- 7: Front wheel
- 8: Rear wheel
- 11: Head pipe
- 12: Upper frame
- 13: Lower frame
- 14: Crankcase
- 15: Cylinder
- 21: Steering shaft
- 22: Left suspension
- 23: Right suspension
- 24: Upper bracket
- 25: Lower bracket
- 26: Handle member
- 31: First left tube
- 32: Second left tube
- 33: First right tube
- 34: Second right tube
- 41: Front brake device
- 42: Brake lever
- 43: Front brake cable
- 44: Rear brake device
- 45: Brake pedal
- 46: Combined brake device
- 48: Combined brake cable
- 49: Combined actuation mechanism
- 61: First portion
- 62: Second portion
- 63: Third portion
- 64: Cable bracket
- 66: Bundle member
- A1: First region
- A2: Second region

## Claims

1. A straddled vehicle comprising:
a vehicle body frame (2) including a head pipe (11) disposed in a middle of the straddled vehicle in a vehicle width direction, the head pipe (11) extending forward and downward, an upper frame (12) connected to the head pipe (11) and extending backward from the head pipe (11), and a lower frame (13) disposed at least in part below the upper frame (12), the lower frame (13) is connected to the head pipe (11) and extends from the head pipe (11) backward and downward;
an engine (5) disposed below at least part of the upper frame (12), the engine (5) being disposed backward of at least part of the lower frame (13);
a front wheel (7) disposed forward of the engine (5);
a rear wheel (8) disposed backward of the engine (5);
a left suspension (22) supporting the front wheel (7) so as to make the front wheel (7) movable in an up-and-down direction, the left suspension (22) being disposed laterally leftward of the front wheel (7);
a right suspension (23) supporting the front wheel (7) so as to make the front wheel (7) movable in the up-and-down direction, the right suspension (23) being disposed laterally rightward of the front wheel (7);
a steering shaft (21) inserted into the head pipe (11), the steering shaft (21) extending forward and downward;
an upper bracket (24) disposed above the head pipe (11), the upper bracket (24) being connected to the steering shaft (21);
a lower bracket (25) disposed below the head pipe (11), the lower bracket (25) being connected to the steering shaft (21);
a handle member (26) connected to the upper bracket (24), the handle member (26) being operable by a driver;
a front brake device (41) for braking the front wheel (7);
a rear brake device (44) for braking the rear wheel (8);
a brake pedal (45) operated with a foot of the driver; and
a combined brake device (46) causing the rear brake device (44) and the front brake device (41) to be actuated in a linked manner, wherein
the left suspension (22) extends downward and forward and is connected to the upper bracket (24) and the lower bracket (25) in a position located laterally leftward of the head pipe (11),
the right suspension (23) extends downward and forward and is connected to the upper bracket (24) and the lower bracket (25) in a position located laterally rightward of the head pipe (11),
the steering shaft (21), the upper bracket (24), the lower bracket (25), the left suspension (22), the right suspension (23) and the front wheel (7) are turned with respect to the head pipe (11) in conjunction with a motion of the handle member (26),
the front brake device (41) is a drum brake,
the combined brake device (46) includes
a combined actuation mechanism (49) distributing an operating force of the brake pedal (45) to the front brake device (41) and the rear brake device (44), the combined actuation mechanism (49) being disposed backward of at least part of the engine (5), and
a combined brake cable (48) connecting the combined actuation mechanism (49) and the front brake device (41), and
where a first region (A1) is defined as one of regions located on both vehicle width directional sides of a center line (C1) passing through the middle of the straddled vehicle in the vehicle width direction while a second region (A2) is defined as the other of the regions,
the combined brake cable (48) includes a first portion (61), a second portion (62) and a third portion (63),
the first portion (61) is disposed in the first region (A1), extends forward and upward from the combined actuation mechanism (49), and passes through a lateral side of the engine (5) so as to overlap the engine (5) as seen in a vehicle side view,
the third potion is disposed in the second region (A2), extends downward and forward, and is connected to the front brake device (41),
the second portion (62) is connected to the first portion (61) and the third portion (63), extends to cross the middle of the straddled vehicle in the vehicle width direction while passing between the lower frame (13) and the right and left suspensions (23, 22) in a vehicle back-and-forth direction, and is located above a rear end of the front wheel (7) while located below at least part of the lower bracket (25), **characterized in that** the second portion (62) is attached to the vehicle body frame (2) in a position located between a left edge of the left suspension (22) and a right edge of the right suspension (23) in the vehicle width direction, the vehicle body frame (2) includes a stay (68) for attaching the second portion (62), wherein
the stay (68) is directly attached to the lower frame (13)
, or
a gusset (69) is attached to the lower frame (13) and the upper frame (12) the stay (68) is attached to the lower frame (13) through the gusset (69) and the stay (68) protrudes forward of a front edge of the lower frame (13), or
the stay (68) is directly attached to the upper frame (12), or
the stay (68) is directly attached to the head pipe (11).

2. The straddled vehicle according to claim 1, **characterized in that** the engine (5) includes a crankcase (14), and
a cylinder (15) disposed at least in part above the crankcase (14), and
the first portion (61) overlaps the cylinder (15) as seen in the vehicle side view.

3. The straddled vehicle according to claim 1 or 2, **characterized in that** the second portion (62) is attached to the vehicle body frame (2) in a position located below a connected portion (67) between the head pipe (11) and the lower frame (13).

4. The straddled vehicle according to any of claims 1 to 3, **characterized in that** the stay (68) is disposed in a positon located closer to the lower frame (13) than the left suspension (22) and the right suspension (23).

5. The straddled vehicle according to any of claims 1 to 4, **characterized in that** a portion located uppermost in the combined brake cable (48) is located below the connected portion (67) between the head pipe (11) and the lower frame (13).

6. The straddled vehicle according to any of claims 1 to 5, **characterized in that** the second portion (62) is located at least in part above an upper end of the engine (5).

7. The straddled vehicle according to any of claims 1 to 6, **characterized in that** the left suspension (22) includes
a first left tube (31) attached to the front wheel (7), and
a second left tube (32) attached to the first left tube (31) in a contractable/extendable manner, the second left tube (32) being attached to the lower bracket (25),
the right suspension (23) includes
a first right tube (33) attached to the front wheel (7), and
a second right tube (34) attached to the first right tube (33) in a contractable/extendable manner, the second right tube (34) being attached to the lower bracket (25), and
the second portion (62) is located at least in part above an upper end of the first left tube (31) and an upper end of the first right tube (33).

8. The straddled vehicle according to any of claims 1 to 7, **characterized by**:
a cable bracket (64) attached to the engine (5), the cable bracket (64) supporting the first portion (61).

9. The straddled vehicle according to any of claims 1 to 8, **characterized in that** when the handle member (26) is in a straight moving state, the third portion (63) is located at least in part outside one of the right and left suspensions (23, 22) in the vehicle width direction, the one of the right and left suspensions (23, 22) being disposed in the second region (A2).

10. The straddled vehicle according to any of claims 1 to 9, **characterized by**:
a brake lever (42) attached to the handle member (26);
a front brake cable (43) connecting the brake lever (42) and the front brake device (41); and
a bundle member (66) bundling the front brake cable (43) and the third portion (63) together.

11. The straddled vehicle according to claim 10, **characterized in that** the bundle member (66) bundles the front brake cable (43) and the third portion (63) together in a position located below an uppermost portion of the front wheel (7).

12. The straddled vehicle according to any of claims 1 to 9, **characterized by**:
a brake lever (42) attached to the handle member (26); and
a front brake cable (43) connected to the brake lever (42) and the front brake device (41),
wherein
when the handle member (26) is in the straight moving state, the third portion (63) is located at least in part outside the front brake cable (43) in the vehicle width direction.

## Patentansprüche

1. Ein Spreiz-Sitz-Fahrzeug, das umfasst:
einen Fahrzeug-Körper-Rahmen (2) beinhaltet ein Kopf-Rohr (11), das in einer Mitte des Spreiz-Sitz-Fahrzeugs in einer Fahrzeug-Breiten-Richtung angeordnet ist, das Kopf-Rohr (11) erstreckt sich nach vorne und nach unten, einen oberen Rahmen (12), der mit dem Kopf-Rohr (11) verbunden ist und sich von dem Kopf-Rohr (11) nach hinten erstreckt, und einen unteren Rahmen (13), der zumindest teilweise unterhalb des oberen Rahmens (12) angeordnet ist, wobei der untere Rahmen (13) mit dem Kopf-Rohr (11) verbunden ist und sich von dem Kopf-Rohr (11) nach hinten und nach unten erstreckt;
einen Motor (5), der unter zumindest einem Teil des oberen Rahmens (12) angeordnet ist, der Motor (5) ist hinter zumindest einem Teil des unteren Rahmens (13) angeordnet;
ein Vorder-Rad (7), das vor dem Motor (5) angeordnet ist;
ein Hinter-Rad (8), das hinter dem Motor (5) angeordnet ist;
eine linke Aufhängung (22), die das Vorder-Rad (7) trägt, um das Vorder-Rad (7) in einer Auf- und Ab-Richtung bewegbar zu machen, die linke Aufhängung (22) ist seitlich links von dem Vorder-Rad (7) angeordnet;
eine rechte Aufhängung (23), die das Vorder-Rad (7) tragt, um das Vorder-Rad (7) in der Auf- und Ab-Richtung bewegbar zu machen, die rechte Aufhängung (23) ist seitlich rechts von dem Vorder-Rad (7) angeordnet;
eine Lenk-Welle (21), die in das Kopf-Rohr (11) eingesetzt ist, die Lenk-Welle (21) erstreckt sich nach vorne und nach unten;
eine obere Klammer (24), die oberhalb des Kopf-Rohrs (11) angeordnet ist, die obere Klammer (24) ist mit der Lenk-Welle (21) verbunden;
eine untere Klammer (25), die unterhalb des Kopf-Rohrs (11) angeordnet ist, die untere Klammer (25) ist mit der Lenk-Welle (21) verbunden;
ein Lenk-Element (26), das mit der oberen Klammer (24) verbunden ist, das Lenk-Element (26) kann durch einen Fahrer betätigt werden;
eine Vorder-Brems-Vorrichtung (41) zum Abbremsen des Vorder-Rades (7);
eine Rück-Brems-Vorrichtung (44) zum Abbremsen des Hinter-Rades (8);
ein Brems-Pedal (45), das mit einem Fuß des Fahrers betätigt wird; und
eine kombinierte Brems-Vorrichtung (46), die eine gekoppelte Betätigung der Rück-Brems-Vorrichtung (44) und der Vorder-Brems-Vorrichtung (41) bewirkt, wobei die linke Aufhängung (22) sich nach unten und vorne erstreckt und mit der oberen Klammer (24) und der unteren Klammer (25) in einer Position verbunden ist, die sich seitlich links vom Kopf-Rohr (11) befindet,
die rechte Aufhängung (23) sich nach unten und vorne erstreckt und mit der oberen Klammer (24) und der unteren Klammer (25) in einer Position verbunden ist, die sich seitlich rechts vom Kopf-Rohr (11) befindet,
die Lenk-Welle (21), die obere Klammer (24), die untere Klammer (25), die linke Aufhängung (22), die rechte Aufhängung (23) und das Vorder-Rad (7) in Verbindung mit einer Bewegung des Lenk-Elements (26) in Bezug auf das Kopf-Rohr (11) gedreht werden,
die vordere Brems-Vorrichtung (41) ist eine Trommel-Bremse,
die kombinierte Brems-Vorrichtung (46) beinhaltet
einen kombinierten Betätigungs-Mechanismus (49), der eine Betätigungs-Kraft des Brems-Pedals (45) auf die Vorder-Brems-Vorrichtung (41) und die Rück-Brems-Vorrichtung (44) verteilt, der kombinierte Betätigungs-Mechanismus (49) ist hinter zumindest einem Teil des Motors (5) angeordnet ist, und
ein kombiniertes Brems-Kabel (48), das den kombinierten Betätigungs-Mechanismus (49) und die Vorder-Brems-Vorrichtung (41) verbindet, und
wobei ein erster Bereich (A1) als einer der Bereiche definiert ist, die sich auf beiden in Fahrzeug-Breiten-Richtung verlaufenden Seiten einer Mittel-Linie (C1) befinden, die durch die Mitte des Spreiz-Sitz-Fahrzeugs in Fahrzeug-Breiten-Richtung verläuft, während ein zweiter Bereich (A2) als der andere der Bereiche definiert ist,
das kombinierte Brems-Kabel (48) einen ersten Abschnitt (61), einen zweiten Abschnitt (62) und einen dritten Abschnitt (63) umfasst,
der erste Abschnitt (61) in dem ersten Bereich (A1) angeordnet ist, sich von dem kombinierten Betätigungs-Mechanismus (49) nach vorne und nach oben erstreckt und durch eine seitliche Seite des Motors (5) hindurchgeht, so dass er den Motor (5) überlappt, wenn in einer Fahrzeug-Seitenansicht gesehen,
der dritte Abschnitt in dem zweiten Bereich (A2) angeordnet ist, sich nach unten und vorne erstreckt und mit der Vorder-Brems-Vorrichtung (41) verbunden ist,
der zweite Abschnitt (62) mit dem ersten Abschnitt (61) und dem dritten Abschnitt (63) verbunden ist, sich erstreckt, um die Mitte des Spreiz-Sitz-Fahrzeugs in der Fahrzeug-Breiten-Richtung zu überqueren, während er zwischen dem unteren Rahmen (13) und der rechten und linken Aufhängung (23, 22) in einer Fahrzeug-Rückwärts- und -Vorwärts-Richtung hindurchgeht, und oberhalb eines hinteren Endes des Vorder-Rads (7) angeordnet ist, während er unterhalb zumindest eines Teils der unteren Klammer (25) angeordnet ist, **dadurch gekennzeichnet, dass** der zweite Abschnitt (62) an dem Fahrzeug-Körper-Rahmen (2) in einer Position angebracht ist, die sich zwischen einer linken Kante der linken Aufhängung (22) und einer rechten Kante der rechten Aufhängung (23) in der Fahrzeug-Breiten-Richtung befindet, der Fahrzeug-Körper-Rahmen (2) beinhaltet eine Strebe (68) zum Anbringen des zweiten Abschnitts (62), wobei
die Strebe (68) direkt am unteren Rahmen (13) befestigt ist, oder
ein Verstärkung (69) an dem unteren Rahmen (13) und dem oberen Rahmen (12) befestigt ist, die Strebe (68) durch die Verstärkung (69) an dem unteren Rahmen (13) befestigt ist und die Strebe (68) über eine Vorder-Kante des unteren Rahmens (13) hinausragt, oder
die Strebe (68) direkt am oberen Rahmen (12) befestigt ist, oder
die Strebe (68) direkt am Kopf-Rohr (11) befestigt ist.

2. Das Spreiz-Sitz-Fahrzeug gemäß Anspruch 1, **dadurch gekennzeichnet, dass** der Motor (5) beinhaltet
ein Kurbel-Gehäuse (14), und
ein Zylinder (15), der zumindest teilweise oberhalb des Kurbel-Gehäuses (14) angeordnet ist, und
der erste Abschnitt (61) überlappt den Zylinder (15), wenn in einer Fahrzeug-Seitenansicht gesehen.

3. Das Spreiz-Sitz-Fahrzeug gemäß Anspruch 1 oder 2, **dadurch gekennzeichnet, dass** der zweite Abschnitt (62) an dem Fahrzeug-Körper-Rahmen (2) in einer Position angebracht ist, die sich unterhalb eines Verbindungs-Abschnitts (67) zwischen dem Kopf-Rohr (11) und dem unteren Rahmen (13) befindet.

4. Das Spreiz-Sitz-Fahrzeug gemäß irgendeinem der Ansprüche 1 bis 3, **dadurch gekennzeichnet, dass** die Strebe (68) in einer Position angeordnet ist, die näher an dem unteren Rahmen (13) liegt als die linke Aufhängung (22) und die rechte Aufhängung (23).

5. Das Spreiz-Sitz-Fahrzeug gemäß irgendeinem der Ansprüche 1 bis 4, **dadurch gekennzeichnet, dass** ein Abschnitt, der am weitesten oben in dem kombinierten Brems-Kabels (48) angeordnet ist, unterhalb des Verbindungs-Abschnitts (67) zwischen dem Kopf-Rohr (11) und dem unteren Rahmen (13) angeordnet ist.

6. Das Spreiz-Sitz-Fahrzeug gemäß irgendeinem der Ansprüche 1 bis 5, **dadurch gekennzeichnet, dass** der zweite Abschnitt (62) zumindest teilweise oberhalb eines oberen Endes des Motors (5) angeordnet ist.

7. Das Spreiz-Sitz-Fahrzeug gemäß irgendeinem der Ansprüche 1 bis 6, **dadurch gekennzeichnet, dass** die linke Aufhängung (22) beinhaltet
ein erstes linkes Rohr (31), das an dem Vorder-Rad (7) angebracht ist, und
ein zweites linkes Rohr (32), das an dem ersten linken Rohr (31) zusammenziehbar/ausziehbar angebracht ist, das zweite linke Rohr (32) ist an der unteren Klammer (25) angebracht,
die rechte Aufhängung (23) beinhaltet
ein erstes rechtes Rohr (33), das an dem Vorder-Rad (7) angebracht ist, und
ein zweites rechtes Rohr (34), das an dem ersten rechten Rohr (33) in einer zusammenziehbar/ausziehbar angebracht ist, das zweite rechte Rohr (34) ist an der unteren Klammer (25) angebracht, und
der zweite Abschnitt (62) ist zumindest teilweise oberhalb eines oberen Endes des ersten linken Rohrs (31) und eines oberen Endes des ersten rechten Rohrs (33) angeordnet.

8. Das Spreiz-Sitz-Fahrzeug gemäß irgendeinem der Ansprüche 1 bis 7, **gekennzeichnet durch:**
eine Kabel-Klammer (64), die an dem Motor (5) angebracht ist, die Kabel-Klammer (64) tragt den ersten Abschnitt (61).

9. Das Spreiz-Sitz-Fahrzeug gemäß irgendeinem der Ansprüche 1 bis 8, **dadurch gekennzeichnet, dass** wenn das Lenk-Element (26) in einem geradeaus fahrenden Zustand ist, ist der dritte Abschnitt (63) zumindest teilweise außerhalb einer der rechten und linken Aufhängungen (23, 22) in Fahrzeug-Breiten-Richtung angeordnet, die eine der rechten und linken Aufhängungen (23, 22) ist in dem zweiten Bereich (A2) angeordnet.

10. Das Spreiz-Sitz-Fahrzeug gemäß irgendeinem der Ansprüche 1 bis 9, **gekennzeichnet durch:**
einem Brems-Hebel (42), der an dem Lenk-Element (26) angebracht ist;
ein vorderes Brems-Kabel (43), das den Brems-Hebel (42) und die Vorder-Brems-Vorrichtung (41) verbindet; und
ein Bündelungs-Element (66), welches das vordere Brems-Kabel (43) und den dritten Abschnitt (63) zusammen bündelt.

11. Das Spreiz-Sitz-Fahrzeug gemäß Anspruch 10, **dadurch gekennzeichnet, dass** das Bündelungs-Element (66) das vordere Brems-Kabel (43) und den dritten Abschnitt (63) in einer Position bündelt, die sich unter einem obersten Abschnitt des Vorder-Rads (7) befindet.

12. Das Spreiz-Sitz-Fahrzeug gemäß irgendeinem der Ansprüche 1 bis 9, **gekennzeichnet durch:**
einen Brems-Hebel (42), der an dem Lenk-Element (26) angebracht ist; und
ein vorderes Brems-Kabel (43), das mit dem Brems-Hebel (42) und der Vorder-Brems-Vorrichtung (41) verbunden ist, wobei
wenn sich das Lenk-Element (26) im geradeaus fahrenden Zustand befindet, befindet sich der dritte Abschnitt (63) zumindest teilweise außerhalb des vorderen Brems-Kabels (43) in der Fahrzeug-Breiten-Richtung.

## Revendications

1. Véhicule à selle comprenant :
un cadre de carrosserie de véhicule (2) comportant un tuyau de tête (11) disposé au milieu du véhicule à selle dans la direction de la largeur du véhicule, le tuyau de tête (11) s'étendant vers l'avant et vers le bas, un cadre supérieur (12) relié au tuyau de tête (11) et s'étendant vers l'arrière depuis le tuyau de tête (11), et un cadre inférieur (13) disposé au moins en partie en dessous du cadre supérieur (12), le cadre inférieur (13) est relié au tuyau de tête (11) et s'étend depuis le tuyau de tête (11) vers l'arrière et vers le bas ;
un moteur (5) disposé en dessous d'au moins une partie du cadre supérieur (12), le moteur (5) étant disposé vers l'arrière d'au moins une partie du cadre inférieur (13) ;
une roue avant (7) disposée à l'avant du moteur (5) ;
une roue arrière (8) disposée en arrière du moteur (5) ;
une suspension gauche (22) soutenant la roue avant (7) de manière à rendre la roue avant (7) mobile dans une direction de haut en bas, la suspension gauche (22) étant disposée latéralement à gauche de la roue avant (7) ;
une suspension droite (23) soutenant la roue avant (7) de manière à rendre la roue avant (7) mobile dans la direction de haut en bas, la suspension droite (23) étant disposée latéralement à droite de la roue avant (7) ;
un arbre de direction (21) inséré dans le tuyau de tête (11), l'arbre de direction (21) s'étendant vers l'avant et vers le bas ;
un support supérieur (24) disposé au-dessus du tuyau de tête (11), le support supérieur (24) étant relié à l'arbre de direction (21) ;
un support inférieur (25) disposé en dessous du tuyau de tête (11), le support inférieur (25) étant relié à l'arbre de direction (21) ;
un élément de poignée (26) relié au support supérieur (24), l'élément de poignée (26) pouvant être actionné par un conducteur ;
un dispositif de freinage avant (41) pour freiner la roue avant (7) ;
un dispositif de freinage arrière (44) pour freiner la roue arrière (8) ;
une pédale de frein (45) actionnée par un pied du conducteur ; et
un dispositif de freinage combiné (46) amenant le dispositif de freinage arrière (44) et le dispositif de freinage avant (41) à être actionnés de manière liée, où
la suspension gauche (22) s'étend vers le bas et vers l'avant et est reliée au support supérieur (24) et au support inférieur (25) dans une position située latéralement à gauche du tuyau de tête (11),
la suspension droite (23) s'étend vers le bas et vers l'avant et est reliée au support supérieur (24) et au support inférieur (25) dans une position située latéralement à droite du tuyau de tête (11),
l'arbre de direction (21), le support supérieur (24), le support inférieur (25), la suspension gauche (22), la suspension droite (23) et la roue avant (7) sont tournés par rapport au tuyau de tête (11) conjointement avec un mouvement de l'élément de poignée (26),
le dispositif de freinage avant (41) est un frein à tambour,
le dispositif de freinage combiné (46) comporte
un mécanisme d'actionnement combiné (49) distribuant une force d'actionnement de la pédale de frein (45) au dispositif de freinage avant (41) et au dispositif de freinage arrière (44), le mécanisme d'actionnement combiné (49) étant disposé à l'arrière d'au moins une partie du moteur (5), et
un câble de frein combiné (48) reliant le mécanisme d'actionnement combiné (49) et le dispositif de freinage avant (41), et
où une première région (A1) est définie comme l'une des régions situées sur les deux côtés directionnels de la largeur du véhicule d'une ligne centrale (C1) passant par le milieu du véhicule à selle dans la direction de la largeur du véhicule tandis qu'une deuxième région (A2) est définie comme l'autre des régions,
le câble de frein combiné (48) comporte une première partie (61), une deuxième partie (62) et une troisième partie (63),
la première partie (61) est disposée dans la première région (A1), s'étend vers l'avant et vers le haut depuis le mécanisme d'actionnement combiné (49), et passe à travers un côté latéral du moteur (5) de manière à chevaucher le moteur (5) comme on le voit dans une vue latérale du véhicule,
la troisième partie est disposée dans la deuxième région (A2), s'étend vers le bas et vers l'avant, et est reliée au dispositif de freinage avant (41),
la deuxième partie (62) est reliée à la première partie (61) et la troisième partie (63), s'étend pour traverser le milieu du véhicule à selle dans la direction de la largeur du véhicule tout en passant entre le cadre inférieur (13) et les suspensions droite et gauche (23, 22) dans une direction avant-arrière du véhicule, et est située au-dessus d'une extrémité arrière de la roue avant (7) tout en étant située en dessous d'au moins une partie du support inférieur (25), **caractérisé en ce que** la deuxième partie (62) est fixée au cadre de carrosserie de véhicule (2) dans une position située entre un bord gauche de la suspension gauche (22) et un bord droit de la suspension droite (23) dans la direction de la largeur du véhicule, le cadre de carrosserie de véhicule (2) comporte un renfort (68) pour fixer la deuxième partie (62), où
le renfort (68) est directement fixé au cadre inférieur (13), ou un gousset (69) est fixé au cadre inférieur (13) et au cadre supérieur (12), le renfort (68) est fixé au cadre inférieur (13) à travers le gousset (69), et le renfort (68) fait saillie vers l'avant d'un bord avant du cadre inférieur (13), ou le renfort (68) est directement fixé au cadre supérieur (12), ou le renfort (68) est directement fixé au tuyau de tête (11).

2. Véhicule à selle selon la revendication 1, **caractérisé en ce que** le moteur (5) comporte
un carter (14), et
un cylindre (15) disposé au moins en partie au-dessus du carter (14), et
la première partie (61) chevauche le cylindre (15) comme on le voit dans la vue latérale du véhicule.

3. Véhicule à selle selon la revendication 1 ou 2, **caractérisé en ce que** la deuxième partie (62) est fixée au cadre de carrosserie de véhicule (2) dans une position située en dessous d'une partie reliée (67) entre le tuyau de tête (11) et le cadre inférieur (13).

4. Véhicule à selle selon l'une des revendications 1 à 3, **caractérisé en ce que** le renfort (68) est disposé dans une position située plus près du cadre inférieur (13) que la suspension gauche (22) et la suspension droite (23).

5. Véhicule à selle selon l'une des revendications 1 à 4, **caractérisé en ce qu'**une partie située le plus haut dans le câble de frein combiné (48) est située en dessous de la partie reliée (67) entre le tuyau de tête (11) et le cadre inférieur (13).

6. Véhicule à selle selon l'une des revendications 1 à 5, **caractérisé en ce que** la deuxième partie (62) est située au moins en partie au-dessus d'une extrémité supérieure du moteur (5).

7. Véhicule à selle selon l'une des revendications 1 à 6, **caractérisé en ce que** la suspension gauche (22) comporte
un premier tube gauche (31) fixé à la roue avant (7), et
un deuxième tube gauche (32) fixé au premier tube gauche (31) de manière contractable/extensible, le deuxième tube gauche (32) étant fixé au support inférieur (25),
la suspension droite (23) comporte
un premier tube droit (33) fixé à la roue avant (7), et
un deuxième tube droit (34) fixé au premier tube droit (33) de manière contractable/extensible, le deuxième tube droit (34) étant fixé au support inférieur (25), et
la deuxième partie (62) est située au moins en partie au-dessus d'une extrémité supérieure du premier tube gauche (31) et d'une extrémité supérieure du premier tube droit (33).

8. Véhicule à selle selon l'une des revendications 1 à 7, **caractérisé par** :
un support de câble (64) fixé au moteur (5), le support de câble (64) soutenant la première partie (61).

9. Véhicule à selle selon l'une des revendications 1 à 8, **caractérisé en ce que**, lorsque l'élément de poignée (26) est dans un état de déplacement rectiligne, la troisième partie (63) est située au moins en partie à l'extérieur de l'une des suspensions droite et gauche (23, 22) dans la direction de la largeur du véhicule, l'une des suspensions droite et gauche (23, 22) étant disposée dans la deuxième région (A2).

10. Véhicule à selle selon l'une des revendications 1 à 9, **caractérisé par** :
un levier de frein (42) fixé à l'élément de poignée (26) ;
un câble de frein avant (43) reliant le levier de frein (42) et le dispositif de freinage avant (41) ; et
un élément de regroupement (66) regroupant le câble de frein avant (43) et la troisième partie (63) ensemble.

11. Véhicule à selle selon la revendication 10, **caractérisé en ce que** l'élément de regroupement (66) regroupe le câble de frein avant (43) et la troisième partie (63) ensemble dans une position située en dessous de la partie la plus haute de la roue avant (7).

12. Véhicule à selle selon l'une des revendications 1 à 9, **caractérisé par** :
un levier de frein (42) fixé à l'élément de poignée (26) ; et
un câble de frein avant (43) relié au levier de frein (42) et au dispositif de freinage avant (41),
dans lequel
lorsque l'élément de poignée (26) est dans l'état de déplacement rectiligne, la troisième partie (63) est située au moins en partie à l'extérieur du câble de frein avant (43) dans la direction de la largeur du véhicule.
